# EUROPÄISCHE PATENTSCHRIFT

(11) **EP 1 731 809 B1**
(45) Veröffentlichungstag und Bekanntmachung des Hinweises auf die Patenterteilung: **02.03.2011**
(21) Anmeldenummer: 06011192.9
(22) Anmeldetag: 31.05.2006
(51) Int. Cl.: F16K 11/16, F16K 35/14, B01D 35/00, F16K 5/06

(54) **Schaltvorrichtung für Mehrfachbehandlungsvorrichtungen**
Switching mechanism for multiple treatment devices
Dispositif de distribution pour des dispositifs de traitement multiples

(30) Priorität: 10.06.2005 DE 202005009175 U
(43) Veröffentlichungstag der Anmeldung: 13.12.2006
(73) Patentinhaber: Boll & Kirch Filterbau GmbH, 50170 Kerpen (DE)
(72) Erfinder: Cartarius, Karsten, 52391 Vettweiss (DE); Baers, Guido, 50189 Elsdorf (DE)
(74) Vertreter: Althaus, Arndt

(56) Entgegenhaltungen:
- WO-A-01/29467
- JP-A- 58 131 477
- US-A- 3 556 474
- US-A- 4 254 793

## Beschreibung

Die Erfindung betrifft eine Schaltvorrichtung für Mehrfachbehandlungsvorrichtungen für einen Fluidstrom, insbesondere für Doppelfilter zum Filtern eines Fluidstroms, mit einem einlaßseitigen Verteilventil, mit einem auslaßseitigen Verteilventil, mit jeweils einer Einlaßverbindungsleitung sowie einer Auslaßverbindungsleitung für jede Behandlungsvorrichtung, die mit Ventilanschlüssen der Verteilventile verbunden sind, mit einem im Ventilgehäuse jedes Verteilventils angeordneten kugelförmigen Ventilkörper, der zwischen zwei Schaltstellungen hin- und herbewegbar ist, wobei in den Schaltstellungen jeweils eine der Behandlungsvorrichtungen mit dem Fluidstrom beaufschlagt ist und die anderen Behandlungsvorrichtungen vom Fluidstrom abgesperrt sind, mit einer Schaltwelle, die die Ventilkörper des einlaßseitigen und des auslaßseitigen Verteilventils für deren simultane Betätigung drehfest miteinander verbindet; und mit an der Oberfläche des Ventilkörpers anliegenden Dichtungselementen für einen Dichtsitz an jedem Ventilanschluß.

Das bevorzugte Anwendungsgebiet der Erfindung betrifft Doppel- oder Mehrkammerfilter, die bei der Brauch- und Abwasserreinigung, der Schmierstoffilterung sowie der Filterung von Gasen eingesetzt werden und derart konzipiert sind, daß eine permanente und kontinuierliche Filterung des Fluids bzw. Fluidstroms gewährleistet ist. Hierzu weisen die Doppelfilter einlaßseitige und auslaßseitige Verteilventile auf, welche über eine gemeinsame Schaltwelle miteinander verbunden sind und durch Betätigen eines einzigen Schalthebels simultan betätig werden.

Bei der Filterung insbesondere von giftigen oder umweltschädlichen Gasen wird seit wenigstens 1998 von zahlreichen Firmen wie z.B. der Firma Shell bei den Schaltarmaturen gefordert, daß jede Verbindungsleitung zu den Behandlungsvorrichtungen doppelt abzusichern ist, um selbst bei Undichtigkeiten an dem Ventilsitz bzw. Dichtsitz des Verteilventils mit dem Dichtungselement einen Gasaustritt zu verhindern. Schaltarmaturen, die eine doppelte Absicherung ermöglichen, werden im Stand der Technik häufig als "Double Block and Bleed"-Schaltarmaturen bezeichnet. Um selbst bei Versagen einer oder beider Dichtstellen kein Gas in die abgesperrte Kammer zu bekommen, befindet sich zwischen den Dichtstellen ein sogenannter Bleed-Anschluß mit Entlüftungs- oder Zwischenabsaugungseinrichtungen für die "bleed"-Funktion.

In der DE 600 05 552 T2 ist eine Schaltarmatur für Doppelfilter offenbart, die zusätzliche zu den Verteilventilen noch jeweils ein Sicherheitsventil in den Verbindungsleitungen aufweist, um selbst bei einem Versagen des Dichtsitz am Verteilventil über das Sicherheitsventil eine sichere Abdichtung zu erreichen. Jeweils die beiden Verteilventile sowie zwei der Sicherheitsventile sind mit einer gemeinsamen Schaltwelle betätigbar, wobei über eine zusätzliche Schalthebelkoppelung erreicht wird, daß die drei Schaltwellen nur in einer bestimmten Reihenfolge nacheinander betätigt werden können. Bei der vorgenannten Schaltarmatur sind je Sicherheitsventil zwei einem gemeinsamen Entlüftungsanschluß zugeordnete Entlüftungsventile vorgesehen. Gleichzeitig ist die Anzahl der abzudichtenden Dichtstellen zwischen den einzelnen Ventilgehäusen der Verteilventile, zwischen den Sicherheitsventilen sowie den Entlüftungsventilen mit insgesamt annähernd 50 Dichtstellen äußerst hoch.

Aufgabe der Erfindung ist es, eine Schaltvorrichtung für Mehrfachbehandlungsvorrichtungen, insbesondere für Doppelfilter, zu schaffen, die weiterhin eine Doppelabdichtung (double block) und eine Zwischenabsaugung bzw. Entlüftung (Bleed) und einen Druckausgleich ermöglicht, jedoch wesentlich einfacher zu schalten ist und mit einer geringeren Anzahl an Abdichtstellen zwischen den Gehäuseteilen auskommt.

Diese Aufgabe wird erfindungsgemäß dadurch gelöst, daß für die Abdichtung gegenüber jedem Ventilanschluß jeweils ein erstes Dichtungselement und ein separates zweites Dichtungselement an der Oberfläche des Ventilkörpers anliegen, zwischen denen ein an eine Einrichtung zur Entlüftung, Zwischenabsaugung und/oder Druckausgleich angeschlossener Entlüftungskanal ausgebildet ist. Bei der erfindungsgemäßen Lösung kann auf zusätzliche Sicherheitsventile verzichtet werden, da die doppelte Abdichtung mittels zweier Dichtungselemente je Ventilanschluß erreicht wird. Damit können Dichtstellen an Verbindungsstellen mit Gehäusen von zusätzlichen Absperrorganen, wie z.B. Sicherheitsventilen, entfallen. Gleichzeitig wird die Anzahl der notwendigen Entlüftungseinrichtungen erheblich minimiert. Außerdem braucht, obwohl eine Doppelabdichtung erhalten bleibt, nur ein einziger Schalthebel betätigt zu werden.

Um an der Kugeloberfläche ausreichend Fläche für die Anbringung von zwei abdichtend anliegenden Dichtungselementen zu erreichen, kann es erforderlich sein, Ventilkörper einzusetzen, deren Durchmesser bei gleichen Drücken bzw. Rohrleitungsanschlußdurchmessern entsprechend größer gewählt sind. Hierdurch kann sich die notwendige Größe der Gehäuse der Verteilventile ebenfalls geringfügig relativ zu den bekannten Konstruktionen erhöhen.

Gemäß einem Ausführungsbeispiel kann der Entlüftungskanal von einer zwischen den beiden Dichtungen eines Dichtungspaares ausgebildeten Vertiefung oder Stufe im Gehäuse gebildet sein. Das zweite Dichtungselement kann wenigstens an einem Ventilanschluß in einem Endstück eines Gehäuseteils aufgenommen sein, der lösbar mit einem eine Kugelaufnahme für den Ventilkörper aufweisenden Gehäuseteil verbunden ist, wobei vorzugsweise der Entlüftungs- bzw. Zwischenabsaugkanal mittels Bohrungen oder Durchbrüchen in dem Endstück ausgebildet ist. Diese Ausgestaltung ist insbesondere an einem Ventilanschluß vorteilhaft, an dem ohnehin zwei Gehäuseteile lösbar miteinander verbunden sind, um den Ventilkörper montieren zu können. Alternativ oder zusätzlich kann die Oberfläche des Ventilkörpers an der einem Durchlaß im Ventilkörper abgewandten Rückseite mit wenigstens einer umlaufenden Nut versehen sein. Die Nut bewirkt eine zusätzliche Trennung der Dichtungselemente auf der Kugeloberfläche und verbessert die Absaugung und Zwischensammlung von Fremdkörpern, die eine der Dichtungen passiert haben. Durch die Nut entstehen auch an der Kugeloberfläche voneinander getrennte Dichtflächen. Die Vertiefung im Gehäuse und die Nut in der Oberfläche des Ventilkörpers können auch gleichzeitig vorgesehen sein, so daß Vertiefung und Nut gemeinsam einen Entlüftungskanal mit relativ großem Querschnitt bilden. Besonders vorteilhaft ist, wenn der Ventilkörper für jedes Dichtungspaar eine Nut aufweist, die in der Schaltstellung des Verteilventils, in der eine der beiden Behandlungsvorrichtungen vom Fluidstrom abgekoppelt ist, zwischen den beiden Dichtungen des zugehörigen Dichtungspaares angeordnet ist. Die andere Nut kommt dann nur in Funktion, wenn die Schaltstellung entsprechend geändert und die andere Behandlungsvorrichtung abgesperrt ist.

Weiter vorzugsweise sind im Ventilgehäuse zwei Stichleitungen ausgebildet, wobei die erste Stichleitung in den Entlüftungskanal zwischen dem ersten Dichtungspaar und die zweite Stichleitung in den Entlüftungskanal für das zweite Dichtungspaar mündet. Die beiden Stichleitungen verlaufen vorzugsweise in einer Ebene, die senkrecht zur Schaltwelle steht. Die Entlüftungseinrichtung kann dann an der dem Einlaßanschluß oder Auslaßanschluß der Verteilventile gegenüberliegenden Seite des Verteilventilgehäuses angeschlossen sein. Über eine ggf. absperrbare Verbindungsleitung zwischen beiden Stichleitungen kann ein Druckausgleich stattfinden.

Um eine statisch unbestimmte Anpreßsituation zwischen den beiden Dichtungselementen eines Dichtungspaares und der Kugeloberfläche zu vermeiden, ist besonders vorteilhaft, wenn eine der Dichtungen, vorzugsweise die erste, näher am Ventilanschluß angeordnete Dichtung, mit einem federnden Element, vorzugsweise einem O-Ring, auf die Oberfläche des Ventilkörpers zu vorgespannt ist und/oder die zweite Dichtung formbedingt auf die Oberfläche des Ventilkörpers zu vorgespannt ist. Die zweite Dichtung kann hierbei z.B. in PTFE (Polytetrafluorethylen) und die erste Dichtung in PEEK (Polyetheretherketon) ausgeführt sein. Besonders vorteilhaft ist, wenn beide Dichtungen als Dichtungspaare in zueinander parallelen Ebenen liegen und konzentrisch zu den zugehörigen Ventilanschlüssen und Leitungsquerschnitten ausgerichtet sind, so daß die Dichtungselemente eine Abdichtung konzentrisch zu den abzudichtenden Anschlüssen bewirken. Durch die vorgenannten Maßnahmen nehmen die von den einzelnen Dichtungselementen aufzunehmenden Flächenpressungen erheblich ab, wodurch sich die Lebensdauer der Dichtungselemente zusätzlich erhöht.

Die erfindungsgemäße Ausgestaltung ermöglicht es in besonders vorteilhafter Weise, daß in den Zwischenraum zwischen den beiden Dichtungspaaren eine Anschlußbohrung für eine Differenzdruckmeßeinrichtung mündet. Mit einer Differenzdruckmeßeinrichtung kann der Verschmutzungsgrad der Filtervorrichtungen überwacht werden.

Gemäß einem weiteren Ausführungsbeispiel können beide Dichtungselemente auch unmittelbar an einem Dichtungskörper ausgebildet sein und vorzugsweise aus separaten Dichtflächen an dem Dichtkörper bestehen, zwischen denen der Entlüftungskanal ausgebildet ist. Die funktionelle Separierung der beiden Dichtelemente sowie die Doppelabdichtung an jedem Anschluß bleiben auch dann erhalten, wenn beide Dichtelemente z.B. als Dichtflächen an einem einzigen Dichtungskörper ausgebildet sind. Der Dichtungskörper kann dann insbesondere als Ring ausgebildet sein, der zwischen den durch eine Basis verbundenen Dichtflächen eine den Entlüftungskanal bildende Nuteinziehung aufweist, in die vorzugsweise mehrere Radialbohrungen münden. Die Verwendung nur eines Dichtungsringes erleichtert das Auswechseln der die Doppeldichtung gewährleistenden Dichtungselemente.

Die Durchlaßöffnung im Ventilkörper besteht vorzugsweise aus einem sich annähernd über eine Kugelhälfte erstreckenden Schlitz, der senkrecht zur Drehachse der Schaltwelle verläuft. Mit einem Schlitz, der beispielsweise von einer geraden Einfräsung gebildet werden kann, kann gewährleistet werden, daß beim Schließen des Zuflusses zu bzw. Abfluß von einer der beiden Behandlungsvorrichtungen gleichzeitig der Zufluß/Abfluß zu bzw. von der anderen Behandlungsvorrichtung geöffnet bzw. abgesperrt wird. Besonders vorteilhaft ist, wenn der Schlitz einen ebenen Boden aufweist, bis an die Kugeloberfläche heranreicht und die Schlitzbreite dem lichten Durchmesser der verbindungsleitungen entspricht.

Die kugelförmigen Ventilkörper können jedoch auch eine winkelförmige, insbesondere L-förmige Durchlaßöffnung aufweisen, deren Mündungsöffnung an der Kugeloberfläche einen größeren Querschnitt als die Durchlaßöffnung aufweist, wobei vorzugsweise die Erweiterung mittels einer schlitzartigen Auffräsung gebildet ist. Mit den Erweiterungen der Mündungsöffnungen wird eine ausreichende Überdeckung gewährleistet.

Die erfindungsgemäße Schaltvorrichtung ist grundsätzlich geeignet, automatisch, z.B. durch einen mit der Schaltwelle zusammenwirkenden motorischen Antrieb, geschaltet zu werden. In den meisten Anwendungsfällen wird jedoch an der Schaltwelle ein manuell betätigbarer Schalthebel angeschlossen sein. Insbesondere bei der Ausgestaltung mit manuell betätigbarem Schalthebel ist besonders vorteilhaft, wenn die Schaltvorrichtung eine mechanische Schaltsicherung aufweist, die ein unbeabsichtigtes Betätigen der Schaltwelle oder des Schalthebels verhindert. Die Schaltsicherung kann insbesondere einen mit dem Schalthebel zusammenwirkenden und zwischen einer Sperrstellung und einer Freigabestellung verschwenkbaren Riegel oder Bügel aufweisen. Besonders vorteilhaft ist, wenn der Riegel schwerkraftbedingt, durch Federkraft oder auf andere Weise in die Sperrstellung vorgespannt bzw. vorbelastet ist. Wenn dann der Riegel in einer der beiden Schaltstellungen, in der eine Behandlungsvorrichtung abgesperrt und die andere mit dem Fluidstrom beaufschlagt ist, unmittelbar in Schaltrichtung am Schalthebel anliegt, kann dieser Schalthebel nicht betätigt werden, solange der Riegel nicht entgegen seiner Vorbelastung angehoben, mithin weggeschwenkt, wird. Bei der Ausgestaltung mit Riegel kann dieser insbesondere an den Behandlungsvorrichtungen schwenkbar gelagert sein. Als Schaltsicherung können jedoch auch andere Vorrichtungen und Einrichtungen Verwendung finden. Bei der erfindungsgemäßen Schaltvorrichtung ist besonders vorteilhaft, wenn für jedes Verteilventil (nur) ein oder zwei Entlüftungsventile und ggf. ein Bleedventil vorgesehen ist/sind. Je nach Ventilstellung der Entlüftungs- und Bleedventile kann über die Entlüftungskanäle eine Zwischenabsaugung oder ein Druckausgleich stattfinden.

Das Konzept mit einer doppelten Abdichtung an der Schaltkugel eines Verteilventils kann auch von eigenständiger erfinderischer Bedeutung sein und auch bei Schaltvorrichtungen für Doppelfilter oder bei anderen Schaltarmaturen zum Einsatz kommen. Die Erfindung kann daher auch Schaltvorrichtungen mit einem Verteilventil, mit Verbindungsleitungen z.B. für Behandlungsvorrichtungen, die an Ventilanschlüsse des Verteilventils angeschlossen sind, mit einem im Ventilgehäuse des Verteilventils angeordneten kugelförmigen Ventilkörper und mit an der Oberfläche des Ventilkörpers anliegenden Dichtungselementen für einen Dichtsitz an jedem Ventilanschluß betreffen, die dadurch gekennzeichnet sind, daß für die Abdichtung gegenüber jedem Ventilanschluß jeweils ein erstes Dichtungselement und ein separates zweites Dichtungselement an der Oberfläche des Ventilkörpers anliegen, zwischen denen ein an eine Entlüftungseinrichtung angeschlossener Entlüftungskanal ausgebildet ist.

Weitere Vorteile und Ausgestaltungen der Erfindung ergeben sich aus der nachfolgenden Beschreibung von in der Zeichnung dargestellten bevorzugten Ausführungsbeispielen. In der Zeichnung zeigen:
- Fig. 1: in einem Vertikalschnitt einen Doppelfilter mit erfindungsgemäßer Schaltvorrichtung;
- Fig. 2: in einem Vertikalschnitt durch eines der beiden Verteilventile die beidseitige Doppelabdichtung an der Verteilventilkugel gemäß einem ersten Ausführungsbeispiel;
- Fig. 3: eine Detailansicht von III in Fig. 2;
- Fig. 4: einen Horizontalschnitt durch das Verteilventil aus Fig. 3;
- Fig. 5: perspektivisch ein Ausführungsbeispiel für eine Schaltsicherung;
- Fig. 6: perspektivisch eine Schaltkugel für die erfindungsgemäße Schaltvorrichtung gemäß einem zweiten Ausführungsbeispiel;
- Fig. 7A,7B: anhand von Horizontalschnitten durch die Schaltvorrichtung den Umschaltvorgang mit der Schaltkugel gemäß dem zweiten Ausführungsbeispiel;
- Fig. 8: in einer Ansicht ähnlich zu Fig. 3 eine Verteilventilkugel mit einem doppelt abdichtenden Dichtungskörper gemäß einem dritten Ausführungsbeispiel;
- Fig. 9: in perspektivischer Darstellung den Dichtungskörper beim dritten Ausführungsbeispiel;
- Fig. 10: die beim dritten Ausführungsbeispiel eingesetzte Verteilventilkugel in Draufsicht auf eine Mündungsöffnung; und
- Fig. 11: eine Schnittansicht entlang XI-XI in Fig. 10.

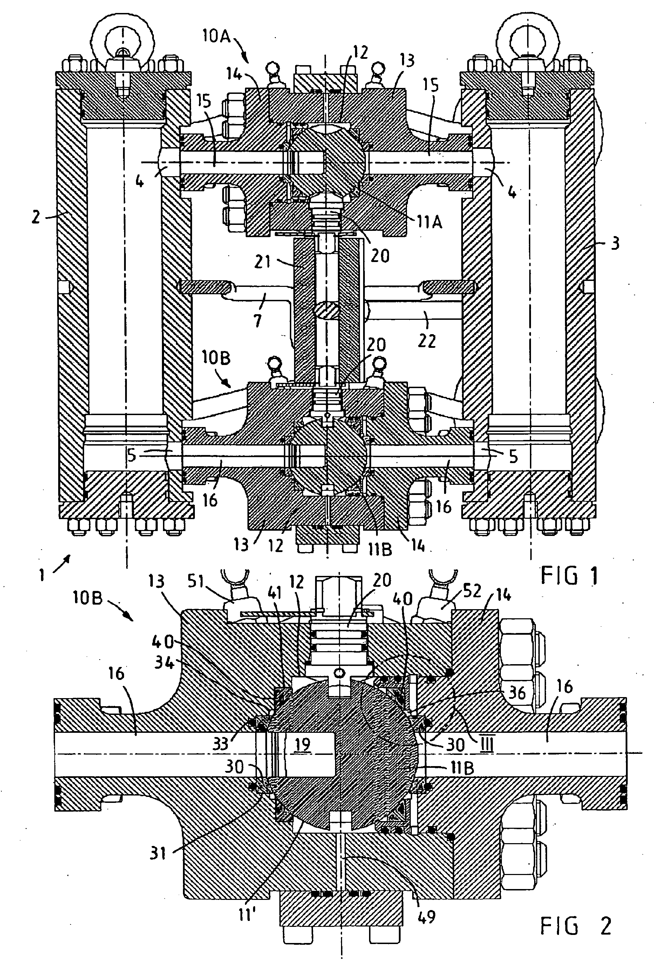

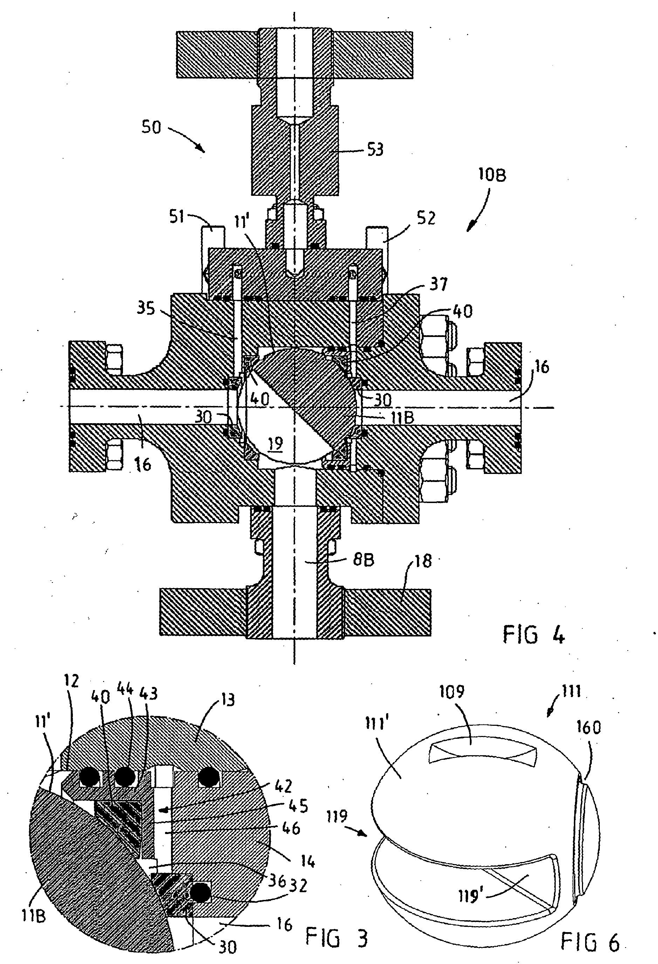

Der in Fig. 1 insgesamt mit Bezugszeichen 1 bezeichnete Doppelfilter weist eine erste Filtervorrichtung 2 und eine zweite Filtervorrichtung 3 mit nicht dargestellten Filterelementen auf. Durch Umschalten der insgesamt mit Bezugszeichen 10 bezeichneten Schaltvorrichtung kann einer der beiden Filtervorrichtungen 2 wahlweise ein Fluidstrom wie ein Öl-, Schmierstoff- oder Gasstrom zur Filterung zugeführt werden, während die andere Behandlungsvorrichtung 3 gegenüber dem Fluidstrom abgedichtet abgesperrt ist und z.B. zu Wartungszwecken demontiert werden kann. Beide Filtervorrichtungen 2, 3 können im Wesentlichen einen beliebigen Aufbau haben und sind zueinander identisch ausgeführt. Beide Filtervorrichtungen 2, 3 weisen jeweils einen Filtereinlaß 4 und einen Filterauslaß 5 auf, wobei an die Filtereinlässe 4 der ein einlaßseitiges Verteilventil aufweisende bzw. bildende Schaltvorrichtungsteil 10A mit der Einlaßverteilventilkugel 11A und an die hier unteren Filterauslässe 5 der ein auslaßseitiges Verteilventil aufweisende bzw. bildende Schaltvorrichtungsteil 10B mit der Auslaßventilkugel 11B angeschlossen ist. Fig. 1 läßt gut erkennen, daß beide Schaltvorrichtungsteile 10A und 10B quasi einen identischen Aufbau aufweisen und jeweils von einem die Kugelaufnahme 12 als integralen Bestandteil umfassenden Gehäuseteil 13 sowie von einem an diesen lösbar angeflanschten Gehäuseteil 14 gebildet sind. Beim gezeigten Ausführungsbeispiel sind die Gehäuseteile 13, 14 des einlaßseitigen Schaltvorrichtungsteils 10A und des auslaßseitigen Schaltvorrichtungsteils 10B spiegelverkehrt montiert, um mit denselben Einzelteilen das einlaßseitige und auslaßseitige Verteilventil als Schaltarmatur bilden zu können. Die Gehäuseteile 13, 14 des einlaßseitigen Schaltvorrichtungsteils 10A sind mit Einlaßverbindungsleitungen 15 und die Gehäuseteile 13, 14 des auslaßseitigen Schaltvorrichtungsteils 10B mit Auslaßverbindungsleitungen 16 versehen, wobei zusätzlich in die Kugelaufnahme 12 für die Schaltkugeln 11A, 11B jeweils ein für beide Filtervorrichtungen 2, 3 gemeinsamer Fluideinlaß (8A) bzw. Fluidauslaß (8B, Fig. 4) mündet.

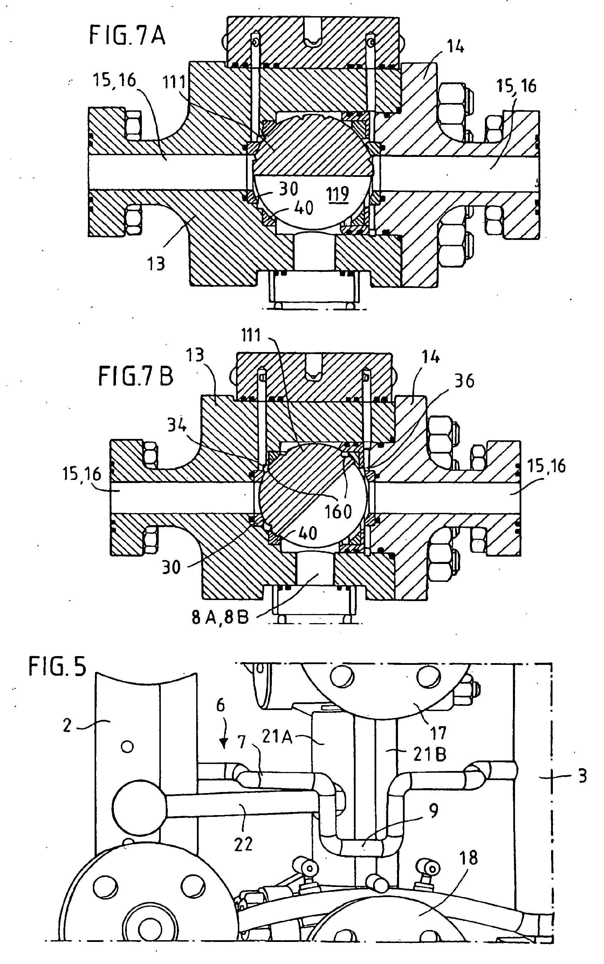

Die Zuleitungen für den Fluideinlaß bzw. den Fluidauslaß werden an den in Fig. 5 dargestellten einlaßseitigen Flanschanschluß 17 bzw. den auslaßseitigen Flanschanschluß 18 angeschlossen. Je nach Schaltstellung der beiden Verteilventilkugeln 11A, 11B wird der über den Fluideinlaß dem einlaßseitigen Verteilventil 10A zugeführte Fluidstrom über die Einlaßverbindungsleitung 15 einer der Behandlungsvorrichtungen, in Fig. 1 der Filtervorrichtung 2, zugeführt, dort gefiltert und dann über die Auslaßverbindungsleitung 16 und die Verteilventilkugel 11B des auslaßseitigen Verteilventils zum Fluidauslaß abgeführt. Die Strömungsführung innerhalb der Verteilventilkugeln 11A, 11B erfolgt jeweils mit einem Durchlaß 19, der aus einer sich annähernd über eine Kugelhälfte erstreckenden und bis zur Oberfläche der Verteilventilkugeln 11A, 11B heranreichenden Schlitzeinfräsung mit ebenem Grund und zueinander parallelen Seitenwänden besteht. In die Kugeloberfläche 11' beider Verteilventilkugeln 11A, 11B greift jeweils ein drehbar im Gehäuseteil 13 gelagerter Schaltzapfen 20 ein, wobei die beiden Schaltzapfen 20 mittels einer Schaltwelle 21 drehfest miteinander verbunden sind, die um eine hier senkrecht verlaufende Achse drehbar ist. Die Schlitzeinfräsungen in den Schaltkugeln 11A, 11B sind senkrecht zur Drehachse der Schaltwelle 21 ausgerichtet.

Die Schaltwelle 21 besteht hier, wie insbesondere aus Fig. 5 ersichtlich ist, aus zwei Klemmhälften 21A, 21B, zwischen denen Zapfenvorsprünge der Schaltzapfen 20 zur drehfesten Verbindung der beiden Verteilventilkugeln 11A, 11B eingeklemmt sind. An die Schaltwelle 21 ist ein Schalthebel 22 angeschlossen, durch dessen Betätigung eine begrenzte Schwenkung bzw. Rotation der Schaltwelle 21 und damit der Verteilventilkugeln 11A, 11B um 90° zur Beaufschlagung der jeweils anderen Filtervorrichtung 2 bzw. 3 des Doppelfilters 1 erreicht wird. Ein ungewolltes Schalten der Schaltvorrichtung 10 wird mittels einer mechanischen Schaltsicherung 6 verhindert, die einen an beiden Filtervorrichtungen 2, 3 schwenkbar gelagerten bügelförmigen Riegel 7 mit einer U-förmigen Auskragung 9 in der Bügelmitte aufweist. In der Sperrstellung der Schaltsicherung 6 liegt die Auskragung 9 des Riegels 7 am Hebel 22 an und verhindert mechanisch eine Betätigung des Schwenkhebels 22. Nur durch Hochschwenken des Riegels 7 kommt der Hebel 22 frei und kann um 90° geschwenkt werden. Anschließend fällt die Auskragung 9 am Riegel 7 schwerkraftbedingt wieder in die Sperrstellung zurück.

Eine wesentliche Funktion der beiden die Verteilventile bildenden Schaltvorrichtungsteile 10A, 10B mit den darin drehbeweglich aufgenommenen Verteilventilkugeln 11A, 11B besteht darin, die jeweils nicht im Betrieb befindliche Filtervorrichtung 3 bzw. 2 vom Fluidstrom abgedichtet abzusperren, so daß die abgesperrte Filtervorrichtung gewartet werden kann. Bei der Wartung kann z.B. ein Filterelement aus der abgesperrten Filtervorrichtung entnommen und durch ein neues Filterelement ersetzt werden. Zum abgedichteten Absperren sind, wie nachfolgend unter Bezugnahme auf die Fig. 2 bis 4 erläutert werden wird, jeder Schaltkugel jedes Verteilventils für jeden Ventilanschluß zu den Behandlungsvorrichtungen hin zwei bzw. mehrere Dichtungselementen sowie eine Entlüftungseinrichtungen zugeordnet. Mit den hier jeweils ein Dichtungspaar bildenden Dichtungselementen 30, 40 wird jeweils eine doppelt wirksame Abdichtung zwischen der Kugelaufnahme 12 für die Verteilventilkugeln 11A, 11B und den Einlaßverbindungsleitungen 15 bzw. Auslaßverbindungsleitungen 16 erreicht. Eine Abdichtung erfolgt jeweils am Ventilanschluß zwischen einer der Verbindungsleitungen 15 bzw. 16 und der Kugelaufnahme 12 für die Verteilventilkugeln 11A, 11B.

Fig. 2 zeigt in einer Einzelansicht den unteren Schaltvorrichtungsteil 10B bzw. das auslaßseitige Verteilventil der erfindungsgemäßen Schaltvorrichtung. Da der einlaßseitige Schaltvorrichtungsteil 10A identisch aufgebaut ist, gilt die nachfolgende Beschreibung des Schaltvorrichtungsteils 10B auch für den Schaltvorrichtungsteil 10A. Beide Schaltvorrichtungsteile sind Im gezeigten Ausführungsbeispiel umfaßt jeweils der Gehäuseteil 13 als integralen Bestandteil auch eine der beiden Auslaßverbindungsleitungen 16 (bzw. Einlaßverbindungsleitungen 15), während die zu der anderen Behandlungsvorrichtung führende gegenüberliegende Verbindungsleitung 16 an der Montagestelle zwischen den Gehäuseteilen 13, 14 angeschlossen ist und Bestandteil des Gehäuseteils 14 ist. Sowohl für die Abdichtung des in das Gehäuseteil 13 integrierten Ventilanschluß als auch für die Abdichtung des anderen Ventilanschluß zu den Ausgangsverbindungsleitungen 16 ist jeweils ein Paar von Dichtungselementen mit einem ersten Dichtungselement 30 und einem zweiten Dichtungselement 40 erfindungsgemäß vorgesehen. Im Gehäuseteil 13 liegen beide Dichtungselemente 30, 40 in gehäuseseitigen Vertiefungen bzw. Stufen 31 bzw. 41 an. Beide Dichtungselemente 30, 40 liegen parallel zueinander und konzentrisch um die Auslaßverbindungsleitung 16 herum. Das zweite Dichtungselement 41 ist formbedingt durch geeignete Formgebung auf die Oberfläche 11' der Verteilventilkugel 11B zu vorgespannt, während das erste Dichtungselement 30 z.B. mittels eines O-Rings 33 in Richtung auf die Oberfläche 11' der Schaltkugel 11B zu vorgespannt ist. Zwischen den das Dichtungspaar bildenden Dichtungselementen 30, 40 ist erfindungsgemäß ein Entlüftungskanal 34 ausgebildet, der innerhalb des Gehäuseteils 13 aus einer weiteren Stufe zwischen den Aufnahmensitzen 31, 41 für die beiden Dichtungselemente 30, 40 bestehen kann. Dieser Entlüftungskanal 34 ist über die aus Fig. 4 ersichtliche Stichleitung 35 an ein erstes Nadelventil bzw. Entlüftungsventil 51 einer insgesamt mit Bezugszeichen 50 bezeichneten Entlüftungseinrichtung für die Verteilventile bzw. Schaltvorrichtungsteile 10A, 10B angeschlossen.

Ein entsprechendes Dichtungspaar mit Dichtungselementen 30, 40 sowie einem Entlüftungskanal 36, der über eine zweite Stichleitung 37 an ein zweites Nadelventil 52 der Entlüftungsvorrichtung 50 angeschlossen ist, ist auch am gegenüberliegenden Ventilanschluß für die zweite Verbindungsleitung 16 vorgesehen. Im Ausführungsbeispiel gemäß der Fig. 2 bis 4 ist der Fluidauslaß 8B am Flansch 18 mittels der Verteilventilkugel 11B und den in der rechten Hälfte gezeigten Dichtungselementen 30, 40, die abdichtend an der Kugeloberfläche 11' anliegen, von der rechten Auslaßverbindungsleitung 16 abgedichtet abgesperrt. Aus der Detailansicht in Fig. 3 ist hierbei besonders gut ersichtlich, daß das näher an der Verbindungsleitung 16 liegende Dichtungselement 30 auch an der Fügestelle zwischen den Gehäuseteilen 13, 14 mittels eines O-Rings 32 auf die Oberfläche 11' der Verteilventilkugel 11 zu vorgespannt ist, während das zweite, weiter außen liegende Dichtungselement 40 in einem Endstück 42 des Gehäuseteils 14 aufgenommen ist, der von der Montageseite für die Schaltkugel 11B her in die Ventilkugelaufnahme 12 im Gehäuseteil 13 eingesetzt ist. Das Endstück 42 weist einen Umfangsrand 43, der mittels mehrerer O-Ringe 44 abgedichtet an der Innenseite der Kugelaufnahme 12 bzw. des Gehäuseteils 13 anliegt, und einen Rückhalteflansch 45 für das Dichtungselement 40 auf, an dessen Rückseite mittels Bohrungen oder Durchbrüchen 46 ein Verbindungskanal zum zwischen den beiden Dichtungselementen 30, 40 gebildeten Absaugkanal bzw. Entlüftungskanal 36 gebildet ist, der in die Stichleitung 37 (Fig. 4) mündet. Das erste Dichtungselement 30 ist zurückversetzt in einer Vertiefung oder Stufe in der Stirnseite dieses Gehäuseteils 14 angeordnet. Beiden an die jeweiligen Stichleitungen 35, 37 angeschlossenen Nadelventilen 51, 52 ist dann ein übergeordnetes (Bleed-)Ventil 53 zugeordnet.

Bei beiden Ventilanschlüssen sind die Dichtungselemente 30 sowie 40 vorzugsweise identisch aufgebaut, wobei das erste, unmittelbar an die Verbindungsleitungen 16 angrenzende und diese konzentrisch umgebende Dichtungselement 30 beispielsweise aus PEEK und das zweite, einen größeren Durchmesser aufweisende Dichtungselement 40 beispielsweise aus PTFE mit formbedingter Vorspannung bestehen kann. Durch die formbedingte Vorspannung des zweiten Dichtungselementes 40 und die mittels der beiden O-Ringe 32, 33 aufgebrachte Vorspannung der beiden ersten Dichtungselemente 30 wird gewährleistet, daß auch bei fertigungs- oder montagebedingten Toleranzabweichungen keine der beiden Dichtungen die Dichtwirkung der anderen Dichtung aufheben kann und somit beide Dichtungselemente 30, 40 an jedem Ventilanschluß auch bei geringen Drücken ihre Dichtfunktion erfüllen können. An derjenigen Seite, an der bei einer bestimmten Schaltstellung mittels des Dichtungspaares 30, 40 eine vollständige Abdichtung der Verbindungsleitung 16 bewirkt werden soll, wird mithin jederzeit sichergestellt, daß eine doppelte Abdichtung vorhanden ist. Damit können beide Schaltvorrichtungsteile 10A, 10B zugleich eine Doppelabdichtung bewirken und selbst bei Versagen einer der beiden Dichtungselemente 30 oder 40 wäre immer noch ausreichend Sicherheit gegenüber einem Gasaustritt in die jeweils abgesperrte Verbindungsleitung erreicht. Der Verschmutzungsgrad der Filtervorrichtungen kann hierbei z.B. mittels einer Differenzdruckmeßeinrichtung (nicht dargestellt) überwacht werden, welche an einen in die Kugelaufnahme 12 führenden Anschluß 49 angeschlossen ist. Während des Umschaltvorgangs von der einen in die andere Schaltstellung müssen beide Nadelventile 51, 52 geöffnet sein, während das Bleedventil 53 geschlossen ist. Über die Entlüftungskanäle 34, 36, die Stichleitungen 35, 37 und die Entlüftungsventile 51, 52 kann dann ein Druckausgleich zwischen beiden Filtervorrichtungen 2, 3 stattfinden. Soll eine Wartung der abgesperrten Filtervorrichtung erfolgen, wird dasjenige Entlüftungsventil, welches dem Dichtungspaar für die abgesperrte Filtervorrichtung zugeordnet ist, geöffnet, während das andere Entlüftungsventil geschlossen wird. In den Fig. 2 und 4 würde mithin das Entlüftungsventil 52 geöffnet und das Entlüftungsventil 51 geschlossen. Gleichzeitig wird für die Wartung das Bleedventil 53 geöffnet. Am Dichtungspaar an der Schließseite des Verteilventils erfolgt dann eine Zwischenabsaugung. Am Ende des Wartungsvorgangs wird das Bleedventil 53 wieder geschlossen. Falls ein permanenter Druckausgleich stattfinden soll und kein separates Druckausgleichssystem vorgesehen ist, könnten dann beide Nadelventile auch im Normalbetrieb geöffnet werden; u. U. sind jedoch auch im Normalbetrieb die beiden Entlüftungsventile 51,52 geschlossen und werden nur für den Umschaltvorgang geöffnet. Das Schließen erfolgt erst, wenn die Schaltkugel 11B die entsprechende andere Schaltstellung erreicht hat und dann die Schaltsicherung wieder ein unbeabsichtigtes Schalten verhindert.

Die Fig. 6 sowie 7A, 7B zeigen ein Ausführungsbeispiel mit einer geringfügig modifizierten Schaltkugel 111, die in Fig. 6 perspektivisch dargestellt ist. Wie beim ersten Ausführungsbeispiel weist die Schaltkugel 111 einen sich im wesentlichen über eine Kugelhälfte erstreckenden, den Durchlaß 119 bildenden Schlitz mit eben verlaufendem Schlitzgrund 119' sowie quer hierzu eine Vertiefung 109 für den Eingriff der Schaltwelle bzw. eines Schaltzapfens auf. Die Schaltkugel 111 ist zusätzlich an der Oberfläche 111' mit zwei Nuten 160 versehen, welche jeweils in einer der Schaltstellungen der Schaltkugel 111, in welcher eine der beiden Verbindungsleitungen 15 bzw. 16 mit den Dichtungselementen 30, 40 abgedichtet abgesperrt ist, genau zwischen diesen beiden Dichtungselementen 30, 40 positioniert ist. Fig. 7B zeigt die Schaltstellung der Verteilventilkugel 111, in der jeweils der Zufluß zwischen Fluideinlaß 8A bzw. Fluidauslaß 8B und den Einlaßverbindungsleitungen 15 bzw. Auslaßverbindungsleitungen 16 in den Gehäuseteilen 13 bzw. 14 in eine Richtung offen und in die andere Richtung abgesperrt ist. Die Dichtungselemente 30, 40 sind identisch wie beim ersten Ausführungsbeispiel ausgebildet und angeordnet. Der einzige Unterschied zum ersten Ausführungsbeispiel besteht darin, daß jeweils eine der beiden Nuten 160 in der entsprechenden Schaltstellung dem gehäuseseitigen Entlüftungskanal 34 bzw. 36 gegenüberliegt und somit den Querschnitt des Entlüftungskanals 34 bzw. 36 in der jeweiligen Schaltstellung vergrößert. Außerdem bewirken die Nuten 160, daß bei beiden Dichtungspaaren von Dichtungselementen 30, 40 auch auf der Kugeloberfläche 111' getrennte Dichtflächen entstehen. Fig. 7A zeigt eine Zwischenstellung der Schaltkugel 111 beim Umschaltvorgang, bei der kurzfristig alle Anschlußleitungen 15, 16 an den Fluideinlaß bzw. Fluidauslaß angeschlossen sind. In dieser Schaltstellung übernehmen weder die Nuten 160 in der Schaltkugel 111 noch die Dichtungselemente 30, 40 ihre eigentliche Funktion.

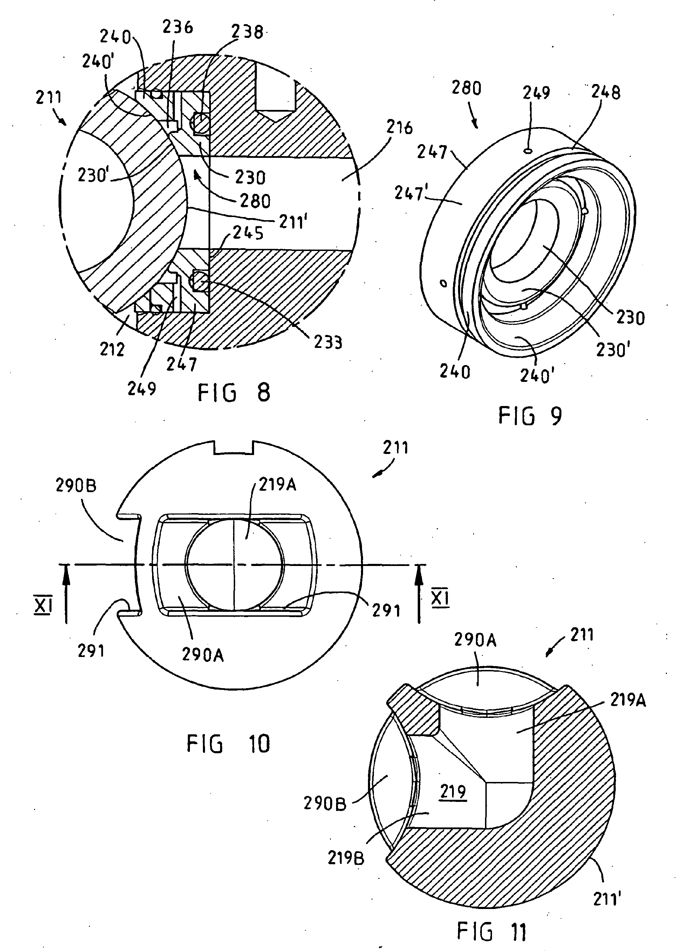

Die Fig. 8 bis 11 zeigen ein weiteres erfindungsgemäßes Ausführungsbeispiel einer Schaltvorrichtung mit modifizierter Verteilventilkugel 211 und einem modifizierten Dichtungskörper 280, der als einstückiges Bauteil ausgeführt ist und sämtliche Funktionselemente wie insbesondere die beiden separaten, aus Dichtflächen 230' und 240' bestehenden Dichtelemente 230, 240 sowie den zwischen diesen ausgebildeten Entlüftungskanal 236 als integrale Bestandteile umfasst. Die beiden die Dichtflächen 230', 240' umfassenden Dichtelemente sind über eine gemeinsame Basis 247 des insgesamt ringförmigen Dichtungskörpers 280 verbunden, in deren Rückseite 245 eine Ringnut 238 zur Aufnahme eines O-Rings 233 ausgebildet ist, mit dem die erste, näher an der Verbindungsleitung 216 ausgebildete Dichtfläche 230' gegen die Oberfläche 211' der Verteilventilkugel 211 vorgespannt wird. Im Außenmantel 247' der Basis 247 ist eine zweite Ringnut 248 ausgebildet, in die z.B. wiederum ein O-Ring eingelegt werden kann, um die Entlüftungseinrichtung von der Kugelaufnahme 212 fluidisch abgedichtet zu trennen und ggf. den Anpressdruck der zweiten Dichtfläche auf die Kugeloberfläche 211' zu erhöhen. Die Entlüftungseinrichtung (nicht dargestellt) ist mit dem Entlüftungskanal 236 zwischen den beiden Dichtflächen 230', 240' mittels mehrere Radialbohrungen 249 verbunden, die sich vom Außenumfang 247' der Basis 247 bis zum Grund des Entlüftungskanals 236 im Dichtungskörper 280 erstrecken. Abweichend von den vorherigen Ausführungsbeispielen weist die Verteilventilkugel 211 eine gleichschenkelige, winkelförmige Durchlaßöffnung 219 mir rechtwinklig zueinander stehenden Öffnungsabschnitten 219A, 219B auf. Die Mündungsöffnung 290A, 290B der Öffnungsabschnitte sind an der Kugeloberfläche 211' mit Erweiterungen versehen, die mittels schlitzartiger Auffräsungen gebildet sind, deren einander zugewandten Flanken senkrecht zur Drehachse der Verteilventilkugeln 211 stehen. Die Mündungsöffnungen 290A, 290B weisen hierdurch einen deutlich größeren Querschnitt auf als die Durchlaßöffnung 219. Die schlitzartigen Auffräsungen gewährleisten eine ausreichende Überschneidung beim Schaltvorgang.

Für den Fachmann sind aus der vorhergehenden Beschreibung zahlreiche Modifikationen ersichtlich, die in den Schutzbereich der anhängenden Ansprüche fallen sollen. Das einlaßseitige Verteilventil könnte auch unten und das auslaßseitige Verteilventil könnte oben angeordnet sein, wie dies insbesondere bei Gasen üblich ist. Die Gehäuse für die Schaltvorrichtungsteile bzw. Verteilventile könnten auch dreiteilig aufgebaut sein und jede Anschlußleitung wird separat angeflanscht. Bei der entsprechenden Ausgestaltung könnte dann auf beiden Seiten der Verteilventilkugel ein Endstück an den anzubauenden Gehäuseteilen die äußere Dichtung aufnehmen. Die Dichtungselemente auf der einen und auf der anderen Seite könnten auch unterschiedlich gestaltet sein. Das erfindungsgemäß vorgesehene Paar von Dichtungselementen, um bezüglich jedem Ventilausgang bzw. Ventilanschluß eine doppelte Abdichtung zu erreichen, könnte auch bei anderen Schaltvorrichtungen zum Einsatz kommen, bei denen nur einlaßseitig oder nur auslaßseitig ein Verteilventil vorgesehen ist. Solche und weitere Modifikationen sollen in den Schutzbereich der anhängenden Ansprüche fallen.

## Patentansprüche

1. Schaltvorrichtung für Mehrfachbehandlungsvorrichtungen für einen Fluidstrom, insbesondere für Doppelfilter zum Filtern eines Fluidstroms, mit einem einlaßseitigen Verteilventil (10A), mit einem auslaßseitigen Verteilventil (10B), mit jeweils einer Einlaßverbindungsleitung (15) sowie einer Auslaßverbindungsleitung (16) für jede Behandlungsvorrichtung, die an Ventilanschlüsse der Verteilventile angeschlossen sind, mit einem im Ventilgehäuse (13, 14) jedes Verteilventils angeordneten kugelförmigen Ventilkörper (11A, 11B; 111; 211), mit einer Schaltwelle (21), die die Ventilkörper (11A, 11B) des einlaßseitigen und des auslaßseitigen Verteilventils für deren simultane Betätigung drehfest miteinander verbindet, und mit an der Oberfläche (11', 111'; 211') der Ventilkörper anliegenden Dichtungselementen für einen Dichtsitz an jedem Ventilanschluß, **dadurch gekennzeichnet, daß** für die Abdichtung gegenüber jedem Ventilanschluß jeweils ein erstes Dichtungselement (30; 230) und ein separates zweites Dichtungselement (40; 240) an der Oberfläche (11', 111'; 211') des Ventilkörpers (11A, 11B; 111; 211) anliegen, zwischen denen ein an eine Entlüftungseinrichtung (50) angeschlossener Entlüftungskanal (34, 36 ; 160; 236) ausgebildet ist.

2. Schaltvorrichtung nach Anspruch 1, **dadurch gekennzeichnet, daß** wenigstens einer der Entlüftungskanäle (34) von einer zwischen den beiden Dichtungen (30, 40) eines Dichtungspaares ausgebildeten Vertiefung oder Stufe im Gehäuse (13) gebildet ist.

3. Schaltvorrichtung nach Anspruch 1 oder 2, **dadurch gekennzeichnet, daß** das zweite Dichtungselement (40) wenigstens an einem Ventilanschluß in einem Endstück (42) eines Gehäuseteils (14) aufgenommen ist, der lösbar mit einem eine Kugelaufnahme (12) für den Ventilkörper (11A, 11B; 111) aufweisenden Gehäuseteil (13) verbunden ist, wobei der Entlüftungskanal (36, 46) im Endstück (42) ausgebildet ist.

4. Schaltvorrichtung nach einem der Ansprüche 1 bis 3, **dadurch gekennzeichnet , daß** die Oberfläche (111') des Ventilkörpers an der einem Durchlaß (19) im Ventilkörper (111) abgewandten Rückseite mit wenigstens einer umlaufenden Nut (160) versehen ist.

5. Schaltvorrichtung nach einem der Ansprüche 1 bis 4, **dadurch gekennzeichnet, daß** der Ventilkörper (111) für jedes Dichtungspaar eine Nut (160; 160') aufweist, die in der Schaltstellung des Verteilventils, in der eine der Behandlungsvorrichtungen abgesperrt ist, zwischen den beiden Dichtungen (30, 40) dieses Dichtungspaares angeordnet ist.

6. Schaltvorrichtung nach einem der Ansprüche 1 bis 5, **dadurch gekennzeichnet, daß** im Ventilgehäuse (13, 14) zwei Stichleitungen ausgebildet sind, wobei die erste Stichleitung (35) in den Entlüftungskanal (34) zwischen dem ersten Dichtungspaar und die zweite Stichleitung (37) in den Entlüftungskanal (36) für das zweite Dichtungspaar mündet.

7. Schaltvorrichtung nach einem der Ansprüche 1 bis 6, **dadurch gekennzeichnet, daß** die Entlüftungseinrichtung (50) an der dem Einlaßanschluß (8A) und/oder Auslaßanschluß (8B) gegenüberliegenden Seite des Verteilventilgehäuses (13, 14) angeschlossen ist.

8. Schaltvorrichtung nach einem der Ansprüche 1 bis 7, **dadurch gekennzeichnet, daß** eine der Dichtungen, vorzugsweise die erste, näher am Ventilanschluß angeordnete Dichtung (30; 230) mit einem federnden Element, vorzugsweise einem O-Ring (33; 32; 233), auf die Oberfläche (11; 211') des Ventilkörpers zu vorgespannt ist.

9. Schaltvorrichtung nach einem der Ansprüche 1 bis 8, **dadurch gekennzeichnet, daß** die zweite Dichtung (40) formbedingt auf die Oberfläche (11) des Ventilkörpers zu vorgespannt ist und/ beide Dichtungen (30, 40) eines Dichtungspaares in zueinander parallelen Ebenen liegen und konzentrisch zu den Ventilanschlüssen ausgerichtet sind.

10. Schaltvorrichtung nach einem der Ansprüche 1 bis 9, **dadurch gekennzeichnet, daß** in den Dichtsitz bzw. die Ventilkörperaufnahme (12) zwischen den Dichtungspaaren eine Anschlußbohrung (49) für eine Differenzdruckmeßeinrichtung mündet.

11. Schaltvorrichtung nach einem der Ansprüche 1 bis 10, **dadurch gekennzeichnet, daß** beide Dichtungselemente (230; 240) an einem Dichtungskörper (280) ausgebildet sind und vorzugsweise aus separaten Dichtflächen (230', 240') an dem Dichtkörper (280) bestehen, zwischen denen der Entlüftungskanal (236) ausgebildet ist.

12. Schaltvorrichtung nach Anspruch 11, **dadurch gekennzeichnet, daß** der Dichtungskörper (280) als Ring ausgebildet ist, der zwischen den vorzugsweise durch eine Basis (247) verbundenen Dichtflächen (230', 240) eine den Entlüftungskanal (236) bildende Nuteinziehung aufweist, in die vorzugsweise mehrere Radialbohrungen (249) münden.

13. Schaltvorrichtung nach einem der Ansprüche 1 bis 12, **dadurch gekennzeichnet, daß** die Durchlaßöffnung (19) im Ventilkörper (11A, 11B; 111) aus einem sich annähernd über eine Kugelhälfte erstreckenden Schlitz besteht, der senkrecht zur Drehachse der Schaltwelle (21) verläuft, wobei vorzugsweise der Schlitz (119) einen ebenen Boden (119') aufweist und bis an die Kugeloberfläche (111) heranreicht.

14. Schaltvorrichtung nach einem der Ansprüche 1 bis 12, **dadurch gekennzeichnet, daß** die kugelförmigen Ventilkörper (211) eine winkelförmige, insbesondere L-förmige Durchlaßöffnung (219) aufweisen, deren Mündungsöffnung (290A, 290B) an der Kugeloberfläche (211') einen größeren Querschnitt als die Durchlaßöffnung (219) aufweist, wobei vorzugsweise die Erweiterung mittels einer schlitzartigen Auffräsung, gebildet ist.

15. Schaltvorrichtung nach einem der Ansprüche 1 bis 14, **dadurch gekennzeichnet, daß** an der Schaltwelle (21) ein manuell betätigbarer Schalthebel (22) angeschlossen ist und/oder für jedes Verteilventil (10A, 10B) ein oder zwei Entlüftungsventil/e (51, 52) vorgesehen ist/sind.

16. Schaltvorrichtung nach einem der Ansprüche 1 bis 15, **gekennzeichnet durch** eine mechanische Schaltsicherung (6), die ein unbeabsichtigtes Betätigen der Schaltwelle (21) oder des Schalthebels (22) verhindert, wobei vorzugsweise die Schaltsicherung (6) einen mit dem Schalthebel (22) zusammenwirkenden und zwischen einer Sperrstellung und einer Freigabestellung verschwenkbaren Riegel (7) aufweist.

17. Schaltvorrichtung nach Anspruch 16, **dadurch gekennzeichnet, daß** der Riegel (7) schwerkraftbedingt oder durch Federkraft in Sperrstellung vorbelastet oder vorgespannt ist und/oder dass der Riegel (7) an den Behandlungsvorrichtungen (2, 3) schwenkbar gelagert ist.

18. Schaltvorrichtung nach einem der Ansprüche 1 bis 17, **dadurch gekennzeichnet, daß** mit dem Verteilventil eine Fluidstromverbindung zu einer der Behandlungsvorrichtungen bewirkbar ist, währen die andere Behandlungsvorrichtung gegenüber dem Fluidstrom abgedichtet abgesperrt ist.

## Claims

1. Switching apparatus for multiple-treatment apparatuses for a fluid flow, in particular for double filters for filtering a fluid flow, having an inlet-side distributor valve (10A), having an outlet-side distributor valve (10B), having in each case one inlet connecting line (15) and one outlet connecting line (16) for each treatment apparatus, which are connected to valve connections of the distributor valves, having a spherical valve body (11A, 11B; 111; 211) which is arranged in the valve housing (13, 14) of each distributor valve, having a switching shaft (21) which connects the valve bodies (11A, 11B) of the inlet-side distributor valve and the outlet-side distributor valve fixedly to one another so as to rotate together for their simultaneous actuation, and having sealing elements which bear against the surface (11', 111'; 211') of the valve bodies for a sealing seat at each valve connection, **characterized in that**, for sealing with respect to each valve connection, in each case a first sealing element (30; 230) and a separate second sealing element (40; 240) bear against the surface (11', 111'; 211') of the valve body (11A, 11B; 111; 211), between which a ventilating channel (34, 36; 160; 236) is formed which is connected to a ventilating device (50).

2. Switching apparatus according to Claim 1, **characterized in that** at least one of the ventilating channels (34) is formed by a depression or step in the housing (13), which depression or step is formed between the two seals (30, 40) of a seal pair.

3. Switching apparatus according to Claim 1 or 2, **characterized in that** the second sealing element (40) is received at least at one valve connection in an end piece (42) of a housing part (14), which valve connection is connected releasably to a housing part (13) which has a ball receptacle (12) for the valve body (11A, 11B; 111), the ventilating channel (36, 46) being formed in the end piece (42).

4. Switching apparatus according to one of Claims 1 to 3, **characterized in that** the surface (111') of the valve body is provided with at least one circumferential groove (160) on the rear side which faces away from a passage (19) in the valve body (111).

5. Switching apparatus according to one of Claims 1 to 4, **characterized in that** the valve body (111) has a groove (160; 160') for each seal pair, which groove (160; 160') is arranged between the two seals (30, 40) of said seal pair in the switching position of the distributor valve, in which switching position one of the treatment apparatuses is shut off.

6. Switching apparatus according to one of Claims 1 to 5, **characterized in that** two branch lines are formed in the valve housing (13, 14), the first branch line (35) opening into the ventilating channel (34) between the first seal pair and the second branch line (37) opening into the ventilating channel (36) for the second seal pair.

7. Switching apparatus according to one of Claims 1 to 6, **characterized in that** the ventilating device (50) is connected on that side of the distributor-valve housing (13, 14) which lies opposite the inlet connection (8A) and/or outlet connection (8B).

8. Switching apparatus according to one of Claims 1 to 7, **characterized in that** one of the seals, preferably the first seal (30; 230) which is arranged closer to the valve connection, is prestressed towards the surface (11; 211') of the valve body by way of a resilient element, preferably an O-ring (33; 32; 233).

9. Switching apparatus according to one of Claims 1 to 8, **characterized in that**, on account of its shape, the second seal (40) is prestressed towards the surface (11) of the valve body and/or both seals (30, 40) of a seal pair lie in planes which are parallel to one another and are oriented concentrically with respect to the valve connections.

10. Switching apparatus according to one of Claims 1 to 9, **characterized in that** a connecting hole (49) for a differential-pressure measuring device opens into the sealing seat or the valve-body receptacle (12) between the seal pairs.

11. Switching apparatus according to one of Claims 1 to 10, **characterized in that** both sealing elements (230; 240) are formed on a sealing body (280) and preferably comprise separate sealing faces (230', 240') on the sealing body (280), between which sealing faces (230', 240') the ventilating channel (236) is formed.

12. Switching apparatus according to Claim 11, **characterized in that** the sealing body (280) is configured as a ring which has, between the sealing faces (230', 240) which are preferably connected by a base (247), a groove drawn-in section which forms the ventilating channel (236) and into which a plurality of radial holes (249) preferably open.

13. Switching apparatus according to one of Claims 1 to 12, **characterized in that** the passage opening (19) in the valve body (11A, 11B; 111) comprises a slot which extends approximately over one ball half and runs perpendicularly with respect to the rotational axis of the switching shaft (21), the slot (119) preferably having a planar bottom (119') and reaching as far as the ball surface (111).

14. Switching apparatus according to one of Claims 1 to 12, **characterized in that** the spherical valve bodies (211) have an angular, in particular L-shaped passage opening (219), the orifice opening (290A, 290B) of which has a larger cross section on the ball surface (211') than the passage opening (219), the widened portion preferably being formed by means of a slot-like milled-open portion.

15. Switching apparatus according to one of Claims 1 to 14, **characterized in that** a manually actuable switching lever (22) is connected on the switching shaft (21) and/or one or two ventilating valve(s) (51, 52) is/are provided for each distributor valve (10A, 10B).

16. Switching apparatus according to one of Claims 1 to 15, **characterized by** a mechanical switching safety device (6) which prevents unintentional actuation of the switching shaft (21) or of the switching lever (22), the switching safety device (6) preferably having a bolt (7) which interacts with the switching lever (22) and can be pivoted between a locking position and a release position.

17. Switching apparatus according to Claim 16, **characterized in that** the bolt (7) is preloaded or prestressed into the locking position as a result of gravity or by spring force, and/or **in that** the bolt (7) is mounted pivotably on the treatment apparatuses (2, 3).

18. Switching apparatus according to one of Claims 1 to 17, **characterized in that** a fluid flow connection to one of the treatment apparatuses can be brought about by way of the distributor valve, while the other treatment apparatus is shut off in a manner which is sealed with respect to the fluid flow.

## Revendications

1. Dispositif de commutation pour des dispositifs de traitement multiples pour un courant de fluide, en particulier pour des doubles filtres pour filtrer un courant de fluide, comprenant une soupape de distribution du côté de l'entrée (10A), une soupape de distribution du côté de la sortie (10B), à chaque fois une conduite de connexion d'entrée (15) ainsi qu'une conduite de connexion de sortie (16) pour chaque dispositif de traitement, lesquelles sont raccordées aux raccords de soupape des soupapes de distribution, un corps de soupape de forme sphérique (11A, 11B ; 111 ; 211) disposé dans le boîtier de soupape (13, 14) de chaque soupape de distribution, un arbre de commutation (21), qui relie de manière solidaire en rotation l'un à l'autre en vue de leur actionnement simultané les corps de soupape (11A, 11B) de la soupape de distribution du côté de l'entrée et de la soupape de distribution du côté de la sortie, et des éléments d'étanchéité pour un siège d'étanchéité sur chaque raccord de soupape, s'appliquant sur la surface (11', 111' ; 211') des corps de soupape, **caractérisé en ce que** pour réaliser l'étanchéité vis-à-vis de chaque raccord de soupape, à chaque fois un premier élément d'étanchéité (30 ; 230) et un deuxième élément d'étanchéité séparé (40 ; 240) s'appliquent sur la surface (11', 111' ; 211') du corps de soupape (11A, 11B ; 111 ; 211), entre lesquels est réalisé un canal de ventilation (34, 36 ; 160 ; 236) raccordé à un dispositif de ventilation (50).

2. Dispositif de commutation selon la revendication 1, **caractérisé en ce qu'**au moins l'un des canaux de ventilation (34) est formé par un renfoncement ou un étage dans le boîtier (13), réalisé entre les deux joints d'étanchéité (30, 40) d'une paire de joints d'étanchéité.

3. Dispositif de commutation selon la revendication 1 ou 2, **caractérisé en ce que** le deuxième élément d'étanchéité (40) est reçu au moins sur un raccord de soupape dans un embout (42) d'une partie de boîtier (14), qui est relié de manière desserrable à une partie de boîtier (13) présentant un logement sphérique (12) pour le corps de soupape (11A, 11B ; 111), le canal de ventilation (36, 46) étant réalisé dans l'embout (42).

4. Dispositif de commutation selon l'une quelconque des revendications 1 à 3, **caractérisé en ce que** la surface (111') du corps de soupape est pourvue sur le côté arrière opposé à un passage (19) dans le corps de soupape (111) d'au moins une rainure périphérique (160).

5. Dispositif de commutation selon l'une quelconque des revendications 1 à 4, **caractérisé en ce que** le corps de soupape (111) présente, pour chaque paire de joints d'étanchéité, une rainure (160 ; 160'), qui, dans la position de commutation de la soupape de distribution, dans laquelle l'un des dispositifs de traitement est bloqué, est disposée entre les deux joints d'étanchéité (30, 40) de cette paire de joints d'étanchéité.

6. Dispositif de commutation selon l'une quelconque des revendications 1 à 5, **caractérisé en ce que** dans le boîtier de soupape (13, 14) sont réalisées deux conduites de branchement, la première conduite de branchement (35) débouchant dans le canal de ventilation (34) entre la première paire de joints d'étanchéité et la deuxième conduite de branchement (37) débouchant dans le canal de ventilation (36) pour la deuxième paire de joints d'étanchéité.

7. Dispositif de commutation selon l'une quelconque des revendications 1 à 6, **caractérisé en ce que** le dispositif de ventilation (50) est raccordé du côté du boîtier de la soupape de distribution (13, 14) opposé au raccord d'entrée (8A) et/ou au raccord de sortie (8B).

8. Dispositif de commutation selon l'une quelconque des revendications 1 à 7, **caractérisé en ce que** l'un des joints d'étanchéité, de préférence le premier joint d'étanchéité (30 ; 230) disposé plus près du raccord de soupape, est précontraint avec un élément élastique, de préférence un joint torique (33 ; 32 ; 233), vers la surface (11 ; 211') du corps de soupape.

9. Dispositif de commutation selon l'une quelconque des revendications 1 à 8, **caractérisé en ce que** le deuxième joint d'étanchéité (40) est précontraint du fait de sa forme vers la surface (11) du corps de soupape et les deux joints d'étanchéité (30, 40) d'une paire de joints d'étanchéité se situent dans des plans parallèles et sont orientés concentriquement par rapport aux raccords de soupape.

10. Dispositif de commutation selon l'une quelconque des revendications 1 à 9, **caractérisé en ce qu'**un alésage de raccordement (49) pour un dispositif de mesure de pression différentielle débouche dans le siège d'étanchéité ou le logement de corps de soupape (12) entre les paires de joints d'étanchéité.

11. Dispositif de commutation selon l'une quelconque des revendications 1 à 10, **caractérisé en ce que** les deux éléments d'étanchéité (230 ; 240) sont réalisés sur un corps d'étanchéité (280) et se composent de préférence de surfaces d'étanchéité séparées (230', 240') sur le corps d'étanchéité (280), entre lesquelles est réalisé le canal de ventilation (236).

12. Dispositif de commutation selon la revendication 11, **caractérisé en ce que** le corps d'étanchéité (280) est réalisé sous forme de bague qui présente, entre les surfaces d'étanchéité (230', 240) connectées de préférence par une base (247), un renfoncement de rainure formant le canal de ventilation (236), dans lequel débouchent de préférence plusieurs alésages radiaux (249).

13. Dispositif de commutation selon l'une quelconque des revendications 1 à 12, **caractérisé en ce que** l'ouverture de passage (19) dans le corps de soupape (11A, 11B; 111) se compose d'une fente s'étendant approximativement sur une moitié de sphère, qui s'étend perpendiculairement à l'axe de rotation de l'arbre de commutation (21), la fente (119) présentant de préférence un fond plat (119'), et se prolongeant jusqu'à la surface sphérique (111).

14. Dispositif de commutation selon l'une quelconque des revendications 1 à 12, **caractérisé en ce que** les corps de soupape de forme sphérique (211) présentent une ouverture de passage (219) de forme coudée, notamment en forme de L, dont l'ouverture d'embouchure (290A, 290B) présente sur la surface sphérique (211'), une plus grande section transversale que l'ouverture de passage (219), l'élargissement étant de préférence formé au moyen d'un fraisage en forme de fente.

15. Dispositif de commutation selon l'une quelconque des revendications 1 à 14, **caractérisé en ce qu'**un levier de commutation (22) à commande manuelle est raccordé sur l'arbre de commutation (21) et/ou une ou deux soupapes de ventilation (51, 52) est/sont prévue(s) pour chaque soupape de distribution (10A, 10B).

16. Dispositif de commutation selon l'une quelconque des revendications 1 à 15, **caractérisé par** une fixation de commutation mécanique (6), qui empêche un actionnement accidentel de l'arbre de commutation (21) ou du levier de commutation (22), la fixation de commutation (6) présentant de préférence un verrou (7) coopérant avec le levier de commutation (22) et pouvant pivoter entre une position de blocage et une position de libération.

17. Dispositif de commutation selon la revendication 16, **caractérisé en ce que** le verrou (7) est préchargé ou précontraint dans la position de blocage sous l'effet de la force de pesanteur ou de la force de ressort et/ou **en ce que** le verrou (7) est monté de manière à pouvoir pivoter sur les dispositifs de traitement (2, 3).

18. Dispositif de commutation selon l'une quelconque des revendications 1 à 17, **caractérisé en ce qu'**une connexion de courant de fluide à l'un des dispositifs de traitement peut être réalisée avec la soupape de distribution, tandis que l'autre dispositif de traitement est bloqué de manière étanche par rapport au courant de fluide.
